# EUROPÄISCHE PATENTANMELDUNG

(11) **EP 1 906 616 A1**
(43) Veröffentlichungstag der Anmeldung: **02.04.2008**
(21) Anmeldenummer: 06021046.5
(22) Anmeldetag: 06.10.2006
(51) Int. Cl.: H04L 29/06, H04L 29/08

(54) **Verfahren zur geschützten Einbindung zumindest eines Netzelementes in ein Peer-to-Peer-Netzwerk**

(30) Priorität: 29.09.2006 DE 102006046307
(71) Anmelder: Nokia Siemens Networks GmbH & Co. KG, 81541 München (DE)
(72) Erfinder: Bußer, Jens-Uwe Dr., 81739 München (DE); Kurz, Bernhard, 81739 München (DE)

(57) **Zusammenfassung**

Die Erfindung betrifft ein Verfahren zur geschützten Einbindung zumindest eines Netzelementes (NEx) in ein mehrere Netzelemente (NE1 - NEn) aufweisendes Peer-to-Peer-Netzwerk (P2P), wobei zumindest ein dem einzubindenden Netzelement (NEx) zukünftig benachbartes Netzelement (NEk) innerhalb des Peer-to-Peer-Netzwerkes (P2P) ermittelt wird. Vorteilhaft wird zwischen dem zumindest einem benachbarten Netzelement (NEk) und dem einzubindenden Netzelement (NEx) eine authentifizierte Schlüsselaushandlung durchgeführt, wobei zumindest ein Empfangsschlüssel (SRK_x_px) dem einzubindenden Netzelement (NEx) zugeordnet wird und die weiteren Empfangsschlüssel (SRK_k+N_pk+N - SRK_k-N_pk-N) der das benachbarte Netzelement (NEk) umgebenden Netzelemente (NEk+N - NEk-N) verschlüsselt mit dem zugeordneten Empfangsschlüssel (SRK_x_px) an das neu einzubindende Netzelement (NEx) übertragen werden.

## Beschreibung

Die Erfindung betrifft ein Verfahren zur geschützten Einbindung zumindest eines Netzelementes in ein mehrere Netzelemente aufweisendes Peer-to-Peer-Netzwerk, wobei zumindest ein dem einzubindenden Netzelement zukünftig benachbartes Netzelement innerhalb des Peer-to-Peer-Netzwerkes ermittelt wird.

Aus dem Stand der Technik sind so genannte dezentrale Netzwerke bekannt, bei denen ein überwiegender Anteil von verbundenen Netzelementen anderen Netzelementen Funktionen und Dienstleistungen anbieten und andererseits von anderen Netzelementen angebotene Funktionen und Dienstleitungen nutzen kann, ohne dass hierzu eine zentrale steuernde Instanz, beispielsweise eine Servereinheit vorzusehen ist. Hierzu nimmt ein Netzelement gegenüber einem anderen Netzelement des betrachteten Netzwerkes fallweise die Rolle einer Servereinheit bzw. einer Clienteinheit ein. Die einzelnen ein derartiges dezentrales Netzwerk bildenden Netzelemente werden oftmals auch als "Peers" bezeichnet. Demzufolge werden solche dezentralen Netzwerke auch als Peer-to-Peer-Netzwerke oder abkürzend als P2P-Netzwerke bezeichnet. Die Kommunikation zweier Netzelemente untereinander erfolgt über eine so genannte paketorientierte Ende-zu-Ende-Verbindung.

Zum Aufbau einer derartigen Ende-zu-Ende-Verbindung zwischen zwei Netzelementen des P2P-Netzwerkes ist es erforderlich, die Adressdaten eines Netzelementes wie beispielsweise Anwendername, Telefonnummer, etc. in die IP-Adresse des anzusprechenden Netzelementes umzusetzen. Hierzu sind bereits aus dem Stand der Technik unterschiedliche Verfahren zur Adressauflösung bekannt. Beispielsweise kann das P2P-Netzwerk mit einer Vielzahl von Suchanfragen geflutet werden, um die jeweilige IP-Adresse des gesuchten Netzelementes zu ermitteln.

Eine weitere Möglichkeit bietet die Verwendung so genannter verteilter "Hash-Tabellen" ("Distributed Hash Tables"), welche mittels bekannter Algorithmen wie CHORD oder KADEMILIA das P2P-Netzwerk geeignet strukturieren. Eine Beschreibung des genannten CHORD-Algorithmus ist beispielsweise der Veröffentlichung "Chord: A scalable Peer-to-Peer Lookup Service for Internet Applications" von Stoica, Morris et. al. in MIT Laboratory for Computer Science, 2001 zu entnehmen.

Jedem Netzelement des betrachteten P2P-Netzwerkes wird eine eindeutige Adresse zugeordnet, welche im Folgenden Knoten-ID ("nodeID") genannt wird. Die Knoten-ID definiert die logische Position des jeweiligen Netzelementes innerhalb des P2P-Netzwerkes. Mittels der zugeordneten Knoten-ID können im P2P-Netzwerk gespeicherte, auf die Netzelemente verteilte Daten gesucht werden. Von der Knoten-ID hängt somit ab, für welche Suchbegriffe bzw. diesen zugeordneten Daten das jeweilige Netzelement im P2P-Netzwerk verantwortlich ist.

Abgesehen davon besteht neben anderen Sicherheitsanforderungen wie Zugangskontrolle zu den Daten, Authentifizierung von gespeicherten Daten, etc. auch das Erfordernis, jeweils einem Netzwerkelement eine eindeutige Anwenderidentifizierungskennung ("Unique User Identifier", UUID) zuzuordnen. Die Anwenderidentifizierungskennung wird beispielsweise von einer eindeutigen Bezeichnung des jeweiligen Netzelementes abgeleitet, wie beispielsweise der Kundennummer, Email-Adresse, SIP-URI, Telefonnummer, etc. Die Ableitung erfolgt hierbei mittels eines "Hash"-Wertes (SHA-1, MD5). Die abgeleitete Anwenderidentifizierungskennung wird in ein vorzugsweise digitales Zertifikat integriert, mit dem sich ein Netzelement gegenüber anderen Netzelementen als autorisiertes Mitglied eines P2P-Netzwerkes ausweisen kann. Hierdurch ist es dem Netzelement möglich, mittels der durch die UUID spezifizierten Knoten-ID das P2P-Netzwerk zu betreten.

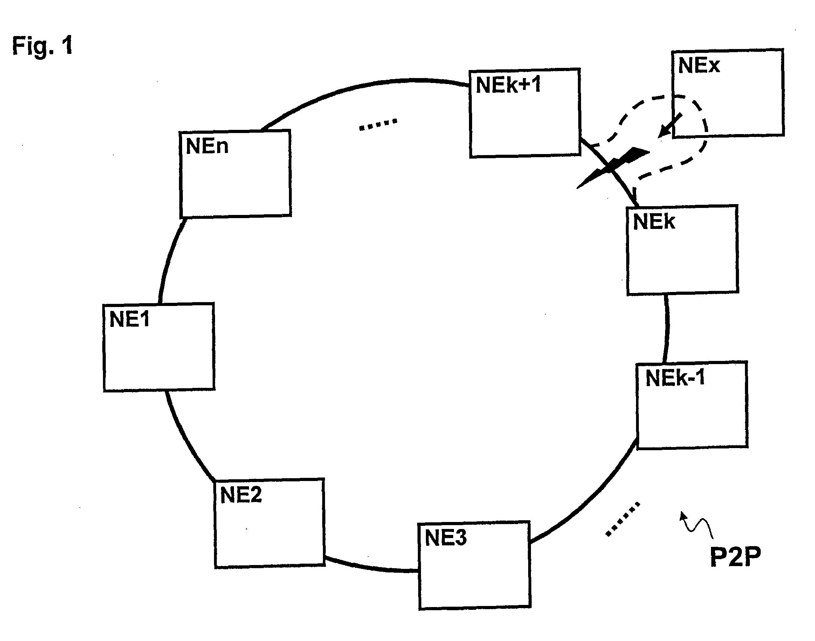

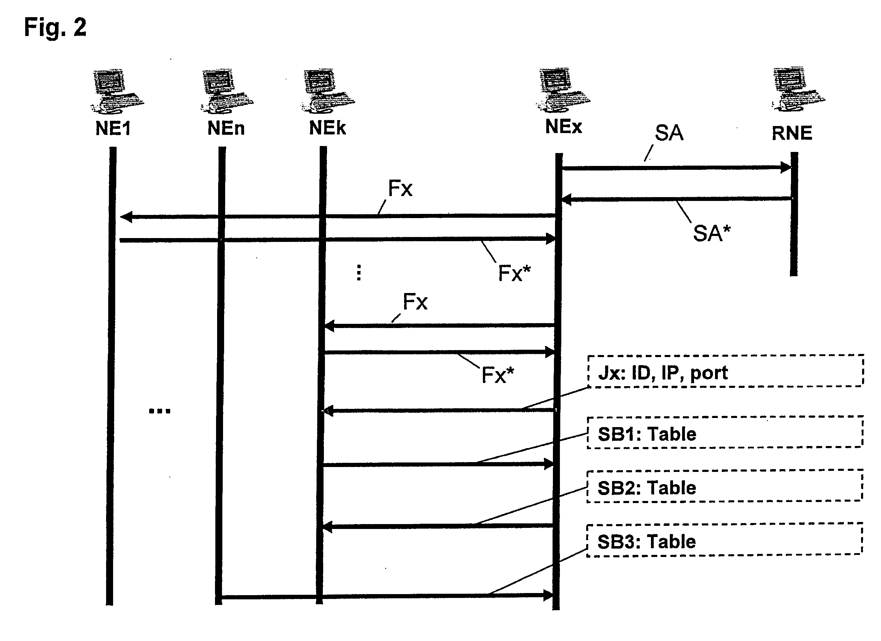

Im Folgenden wird am Beispiel des CHORD-Algorithmus ein Verfahren zur ungeschützten Einbindung eines neuen Netzelementes NEx innerhalb eines bestehendes P2P-Netzwerk P2P anhand der Figuren 1 und 2 erläutert. Figur 1 zeigt beispielsweise ein CHORD-Netzwerk ausgebildetes P2P-Netzwerk P2P mit einer logischen Ringstruktur, welche beispielsweise mehrere Netzelemente NE1 bis NEn umfasst.

In allen Netzelementen NE1 - NEn des CHORD-Netzwerkes sind Informationen über die eigene Position sowie zumindest N benachbarter Netzelemente NE1 - NEn innerhalb des Chord-Netzwerkes P2P in Form einer Tabelle table gespeichert. Eine derartige Tabelle table weist beispielsweise die eigene Knoten-ID ID, die eigene IP-Adresse IP sowie die eigene Portnummer port als auch die Knoten-ID ID, die IP-Adresse IP und die Portnummer port benachbarter Netzelemente NE1 - NEn auf. Beispielsweise kann die Tabelle table die dem Netzelement NEk benachbarten N=3 Vorgänger- und N=3 Nachfolge-Netzelemente NEk+3 - NEk-3 umfassen und beispielsweise folgendermaßen aufgebaut sein:

| table ( | |
|---|---|
| NEk+3 = | ID, IP, port |
| NEk+2 = | ID, IP, port |
| NEk+1 = | ID, IP, port |
| NEk = | ID, IP, port |
| NEk-1 = | ID, IP, port |
| NEk-2 = | ID, IP, port |
| NEk-3 = | ID, IP, port) |

Außerdem verfügen alle Netzelemente über eine weitere Tabelle "finger", die Adressinformationen von vom P2P-Netzwerk P2P entfernten Netzelementen enthält. Mit diesen Informationen sind bei der Suche nach Netzelementen an entfernten Stellen des Ringes Abkürzungen möglich, d.h. es ist nicht erforderlich, sich während der Suche am Ring "entlangzuhangeln".

| | |
|---|---|
| finger( | |
| NEf1 = | ID, IP, port |
| NEf2 = | ID, IP, port |
| NEf3 = Etc.) | ID, IP, port |

Die einzelnen Verfahrensschritte zur Einbindung eines neuen Netzelementes NEx in das bestehende P2P-Netzwerk P2P werden mittels des in Figur 2 beispielhaft dargestellten Signalisierungsdiagrammes näher erläutert.

Zunächst wird durch das neue, einzubindende Netzelement NEx eine Suchanfrage SA an ein ausgewähltes Netzelement, beispielsweise ein "Rendezvous"-Netzelement RNE gesendet. Durch das "Rendezvous"-Netzelement RNE werden die Adressdaten einiger beliebiger Netzelemente, die gerade Teil des P2P-Netzwerkes sind und die als Startknoten für Suchanfragen dienen können, an das neue Netzelement NEx übertragen. Diese "Discovery-Phase" ist optional.

Im Anschluss daran wird durch das neue Netzelement NEx eine Netzelement-Suche ("Find-Peer-Phase") gestartet. Im Rahmen dessen wird durch das neue Netzelement NEx nach derjenigen Position innerhalb des P2P-Netzwerkes P2P gesucht, an der das neue Netzelement NEx in die logische Ringstruktur des CHORD-Netzwerkes P2P eingebunden werden kann.

Hierzu wird durch das neue Netzelement NEx an (zum Beispiel aus der Discovery-Phase) bekannte Netzelemente NE1, NEn etc. jeweils eine Suchnachricht Fx gesendet, welche mittels der zuvor ermittelten Adressdaten adressiert wird. Erhält ein Netzelement NEn eine Suchanfrage Fx bezüglich eines Netzelementes NEx, welches das Netzelement NEn weder aus seiner Nachbartabelle table noch aus seiner Tabelle "finger" kennt, so verweist es auf dasjenige ihm bekannte Netzelement NEk, welches dem gesuchten Netzelement NEx bzw. dessen designierter Position im Ring am nächsten ist. Dieser Vorgang wird solange wiederholt, bis das gesuchte Netzelement bzw. ein oder mehrere Nachbarnetzelemente NEk an der designierten Position des neuen Netzelementes NEx gefunden sind. Dann erhält das neue Netzelement NEx mittels des genannten Verfahrens die Adressinformationen, insbesondere die Knoten-ID, die IP-Adresse sowie die Portnummer port des zur Eintrittsposition direkt benachbarten Netzelementes NEk.

Im Anschluss daran sendet das neu einzubindende Netzelement NEx an das benachbarte Netzelement NEk eine Einbindungsnachricht Jx, welches die Knoten-ID, die IP-Adresse und die Portnummer des neu einzubindenden Netzelementes NEx umfasst. Darauf antwortet das benachbarten Netzelemente NEk mittels einer ersten Stabilisierungsnachricht SB1, in der die vorgenannte Tabelle table der jeweils N Vorgänger- und N Nachfolger-Netzelemente NEk+N, NEk-N des benachbarten Netzelementes NEk sowie der diesen zugeordneten Adressinformationen enthalten sind. Das neu einzubindende Netzelement NEx kann beispielsweise bereits an der vorgesehen Eintrittsposition in der Tabelle table berücksichtigt werden.

Zusätzlich wird durch das benachbarte Netzelement NEk sowie das neu einzubindende Netzelement NEx die Tabelle table mittels weiterer Stabilisierungsnachrichten SB2, SB3 etc. ("Stabilize-Phase") an die weiteren Netzelemente NE1 - NEn des P2P-Netzwerkes P2P versandt. Die Benachrichtigung der weiteren Netzelemente NE1 - NEn kann beispielsweise periodisch oder zyklisch erfolgen, um hierdurch Lastspitzen zu vermeiden.

Auch kann das neu einzubindende Netzelement NEx mehrere Einbindungsnachrichten Jx an verschiedene benachbarte Netzelemente NEk (nicht in den Figuren dargestellt) senden, die daraufhin das neue Netzelement NEx in Ihre Tabelle table mit aufnehmen und im Anschluss daran die aktualisierte Tabelle table mittels weiterer Stabilisierungsnachrichten SB2, SB3 an die weiteren Netzelemente NE1 - NEn weiterleiten.

Liegen in den designierten N Vorgänger- und N Nachfolger-Netzelementen NEx+N, NEx-N des neuen Netzelementes NEx die aktualisierten Tabellen table vor, so sind sämtliche benachbarten Netzelemente NE1 - NEn über das neu eingefügte Netzelement NEx informiert und somit dieses in das P2P-Netzwerk P2P eingebunden. Hierdurch wird eine schnelle Aktualisierung der einzelnen in den Netzelementen NE1 - NEn hinterlegten Tabellen table erreicht, selbst dann wenn mehrere neue Netzelemente NEx in das P2P-Netzwerk P2P eingebunden werden. Nach Einbindung des neuen Netzelementes NEx werden in das P2P-Netzwerk P2P gespeicherte Daten auf das neu eingebundene Netzelement NEx repliziert, da dieses nur für einen Teil der im P2P-Netzwerk P2P gespeicherten Daten verantwortlich ist.

Nachteilig weist das beschriebene Verfahren keine Zugangskontrollmechanismen beispielsweise durch Einschränkung der Wahl der Knoten-ID des neuen Netzelementes NEx auf. Problematisch hierbei ist, dass jedes neu in das CHORD-Netzwerk P2P eintretende Netzelement NEx eine beliebige Knoten-ID und somit eine beliebige Eintrittsposition innerhalb des P2P-Netzwerkes P2P auswählen kann. Hierdurch entsteht die Gefahr, dass ein oder mehrere neu eingebundene Netzelemente NEx die vollständige Kontrolle über einzelne Daten erlangen und diese Daten den weiteren Netzelementen NE1 - NEn nicht mehr zur Verfügung stehen.

Eine Authentifizierung der zur Einbindung des neuen Netzelementes NEx erforderlichen Signalisierungsnachrichten, beispielsweise der Einbindungsnachrichten Jx und der Stabilisierungsnachrichten SB1 - SB3, ist möglich. Diese können beispielsweise mit Hilfe von digitalen Signaturen im Rahmen des ersten ausgetauschten Nachrichtenpaares zwischen dem ermittelten benachbarten und dem neuen Netzelement NEk, NEx erfolgen. Ferner sind die nachfolgenden Stabilisierungsnachrichten SEI - SB3 zur Übertragung der aktualisierten Tabellen table an die weiteren benachbarten Netzelemente NEk+N - NEk-N mittels symmetrischer Schlüssel zu schützen. Zur Verschlüsselung dieser wird beim Aufbau der Verbindung zwischen einem der genannten benachbarten Netzelemente NEk+N - NEk-N und dem neu einzubindenden Netzelement NEx ein gemeinsamer Sitzungsschlüssel dynamisch ausgehandelt, beispielsweise über ein so genanntes Diffie-Hellman-Verfahren. Zur Durchführung dieses Verfahrens wählen beide Netzelemente eine geheime Zufallszahl und berechnen eine Einwegfunktion mit geeigneten, für beide Netzelemente gleichen Diffie-Hellman-Parametern. Das so entstehende Zwischenergebnis wird dann an das jeweils andere Netzelement gesendet. Beide Netzelemente berechnen daraus einen Sitzungsschlüssel, der für beide Netzelemente identisch ist. Dieser Sitzungsschlüssel kann durch Dritte Netzelemente nicht berechnet werden, da hierzu zumindest eine der beiden geheimen Zufallszahlen bekannt sein muss. Eine derartige Lösung ist jedoch nur in P2P-Netzwerke realisierbar, in denen alle Netzelemente eine ausreichende Rechnerleistung aufweisen, um die notwendigen kryptographischen Operationen in einer endlichen Zeit durchführen zu können. Beispielsweise sind bei N benachbarten Netzelementen in jeder Richtung insgesamt 2*N Signaturberechnungen erforderlich. Hierzu kommen noch 2*N Diffie-Hellman-Schlüsselberechnungen und 4*N Signaturüberprüfungen pro neu einzubindenden Netzelement. Zusätzlich sind noch weitere zwei Signaturüberprüfungen, eine Diffie-Hellman-Schlüsselberechnung und eine Signaturerzeugung bei jedem der schon vorhandenen benachbarten 2*N Netzelemente zu berücksichtigen.

Analog hierzu sind beim Verlassen des P2P-Netzwerkes durch ein Netzelement jeweils 2*N benachbarte Netzelemente darüber zu informieren, dass diese das verlassende Netzelement aus Ihrer Tabelle entfernen und durch ein anderes, in ihrer Tabelle nicht enthaltenes Netzelement ersetzen. Hierzu sind jeweils zwei Signaturüberprüfungen, eine Diffie-Hellman-Schlüsselberechnung und eine Signaturerzeugung auf jedem betroffenen Netzelement erforderlich.

Ausgehend vom geschilderten Stand der Technik liegt der Erfindung die Aufgabe zugrunde, ein Verfahren zur sicheren Einbindung eines Netzelementes in ein P2P-Netzwerk anzugeben, welches eine im Vergleich zu bekannten Verfahren reduzierte Anzahl an kryptographischen Operationen erfordert und somit ressourcenschonend und zuverlässig realisierbar ist. Die Aufgabe wird ausgehend vom Patentanspruch 1 durch dessen kennzeichnende Merkmale gelöst.

Der wesentliche Aspekt des erfindungsgemäßen Verfahrens ist darin zu sehen, dass zwischen dem zumindest einem benachbarten Netzelement und dem einzubindenden Netzelement eine authentifizierte Schlüsselaushandlung durchgeführt wird, wodurch zumindest ein Empfangsschlüssel dem neu einzubindenden Netzelement zugeordnet wird und die weiteren Empfangsschlüssel der das benachbarte Netzelement umgebenden Netzelemente mit dem zugeordneten Empfangsschlüssel verschlüsselt an das einzubindende Netzelement übertragen werden. Besonders vorteilhaft liegen somit zumindest im neu einzubindenden und dem direkt benachbarten Netzelementen sämtliche aktuellen Empfangsschlüssel bereits nach einer authentifizierten Schlüsselaushandlung zwischen dem neu einzubindenden und einem direkt benachbarten Netzelement vor, d.h. das neu eingebundene Netzelement kann im Anschluss daran bereits verschlüsselte Stabilisierungsnachrichten an die weiteren benachbarten N Vorgänger- und N Nachfolger-Netzelemente eines eine logische Ringstruktur aufweisenden P2P-Netzwerkes senden.

Weitere vorteilhafte Ausbildungen des erfindungsgemäßen Verfahrens sind den weiteren Patentansprüchen zu entnehmen.

Die Erfindung wird im Folgenden an einem Ausführungsbeispiel anhand von Figuren näher beschrieben. Es zeigen:
- Fig. 1: beispielhaft in einem Blockschaltbild eines P2P-Netzwerkes mit logischer Ringsstruktur,
- Fig. 2: beispielhaft in einem Signalisierungsdiagram die zur ungeschützten Einbindung eines neuen Netzelementes in ein bestehendes P2P-Netzwerk vorgesehen Signalisierungsnachrichten und

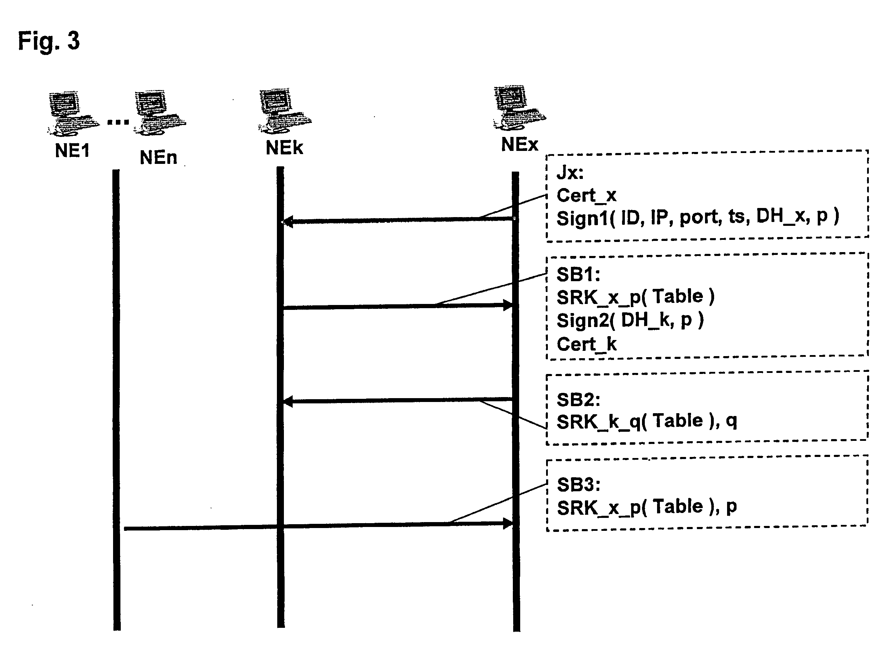

- Fig. 3: beispielhaft in einem weiteren Signalisierungsdiagram die zur sicheren Einbindung eines neuen Netz-elementes in ein bestehendes P2P-Netzwerk vorgesehen Signalisierungsnachrichten.

Die zuvor beschriebene "Discovery-Phase" und "Find-Peer-Phase" werden in analoger Weise durchgeführt.

Nach Auffinden zumindest eines benachbarten Netzelementes NEk durch das neu einzubindende Netzelement NEx im Rahmen der "Find-Peer-Phase" wird zwischen dem zumindest einem ermittelten benachbarten Netzelement NEk und dem einzubindenden Netzelementes NEx ein Empfangsschlüssel SRK_x festgelegt. Hierzu wird zunächst durch das neu einzubindende Netzelement NEx eine authentifizierte Einbindungsnachricht Jx erzeugt, welche ein dem neu einzubindenden Netzelement NEx zugeordnetes erstes Zertifikat Cert_x und eine verschlüsselte erste digitale Signatur Sign1 aufweist.

Die erste digitale Signatur Sign1 umfasst hierbei die öffentlichen Diffie-Hellman-Parameter DH_x des neu einzubindenden Netzelementes NEx sowie weitere Adressinformationen wie beispielsweise die gewünschte Knoten-ID ID, IP-Adresse IP und Portnummer port. Optional kann eine Zeitinformation ts zum Schutz von Replay-Angriffen vorgesehen sein.

In einer bevorzugten Ausführungsform wird die Einbindungsnachricht Jx mit einem Index px versehen. Somit können mehrere derartiger Einbindungsnachrichten Jx an unterschiedliche benachbarte Netzelemente NEk übertragen werden. Die Diffie-Hellman-Parameter DH_x des neu einzubindenden Netzelementes NEx werden entweder für jede einzelne der Einbindungsnachrichten Jx neu erzeugt oder alternativ ein vorberechneter Satz von Diffie-Hellman-Parametern DH_x vorgesehen.

Nach Empfang der Einbindungsnachricht Jx prüft das benachbarte Netzelement NEk zunächst die mittels der Einbindungsnachricht Jx übertragene erste digitale Signatur Sign1 auf dessen Gültigkeit, insbesondere auch die darin enthaltenen Parameter wie beispielsweise die Zeitinformation ts. Führt diese Überprüfung zu einem positiven Ergebnis, so wird ein Empfangsschlüssel SRK_x_px unter Berücksichtigung der übertragenen Diffie-Hellman-Parameter DH_x des neu einzubindenden Netzelementes NEx und der Diffie-Hellman-Parameter DH_k des benachbarten Netzelementes NEk zum Index px ermittelt und dieser dem neu einzubindenden Netzelement NEx in der zu übertragenden Tabelle table zugeordnet.

Mittels des ermittelten Empfangsschlüssels SRK_x_px wird die im benachbarten Netzelement NEk hinterlegte Tabelle table verschlüsselt, welche wie zuvor erläutert die Adressinformationen der N Vorgänger- und N Nachfolger-Netzelemente NEk+N - NEk-N umfasst, wobei vorzugsweise auch das neue Netzelement NEx bereits als benachbartes Netzelement in diese Tabelle table eingefügt werden kann. Zusätzlich zu den zuvor genannten Adressinformationen werden in der Tabelle table die Empfangsschlüssel SRK_k+N_pk+N - SRK_k-N_pk-N der jeweils benachbarten Netzelemente NEk+N - NEk-N mit übertragen, die aus den jeweiligen Diffie-Hellman-Parametern DH_k+N - DH_k-N der benachbarten Netzelemente NEk+N - NEk-N und dem Diffie-Hellman-Parameter DH_x des neu einzubindenden Netzelementes NEx ermittelt werden. Somit ergibt sich beispielsweise eine Tabelle table des folgenden Aufbaus für N=3:

| table ( | |
|---|---|
| NEk+3 = | ID, IP, port, SRK_k+3_pk+3, pk+3 |
| NEk+2 = | ID, IP, port, SRK_k+2_pk+2, pk+2 |
| NEk+1 = | ID, IP, port, SRK_k+1_pk+1, pk+1 |
| NEk = | ID, IP, port, SRK_k_pk, pk |
| NEk-1 = | ID, IP, port, SRK_k-1_pk-1, pk-1 |
| NEk-2 = | ID, IP, port, SRK_k-2_pk-2, pk-2 |
| NEk-3 = | ID, IP, port, SRK_k-3_pk-3, pk-3) |

Die verschlüsselte Tabelle table wird in eine erste Stabilisierungsnachricht SB1 eingefügt und zusammen mit den in einer zweiten digitalen Signatur Sign2 enthaltenen öffentlichen Diffie-Hellman-Parametern DH_k des benachbarten Netzelementes NEk und dem Index px an das neu einzubindende Netzelement NEx übertragen. Die erste Stabilisierungsnachricht SB1 umfasst ferner das zweite Zertifikat CERT_k des benachbarten Netzelementes NEk. Das benachbarte Netzelement NEk kann hierzu entweder die öffentlichen Diffie-Hellman-Parameter DH_k aktuell generieren oder diese aus einem vorberechneten Satz von Parametern auswählen.

Die vom benachbarten Netzelement NEk erzeugte erste Stabilisierungsnachricht SB1 wird im neu einzubindenden Netzelement NEx empfangen und dort die in der ersten Stabilisierungsnachricht SB1 übertragene zweite digitale Signatur Sign2 auf Ihre Gültigkeit hin überprüft, um sicher zu stellen, dass die erste Stabilisierungsnachricht SB1 tatsächlich durch das benachbarte Netzelement NEk erzeugt wurde.

Im Anschluss daran wird durch das neu einzubindende Netzelement NEx mittels der übermittelten Diffie-Hellman-Parameter DH_k des benachbarten Netzelementes NEk und dessen eigenen Diffie-Hellman-Parameter DHx der Empfangsschlüssels SRK_x_px zum Index px ermittelt. Mit Hilfe des ermittelten Empfangsschlüssels SRK_x_px wird die verschlüsselt übertragene Tabelle table entschlüsselt. Neben den übertragenen Adressinformationen wie beispielsweise der jeweiligen Knoten-ID ID, IP-Adresse IP und Portnummer port der benachbarten Netzelemente NEk+3 - NEk-3 erhält das neu einzubindende Netzelement NEx auch die Empfangsschlüssel SRK_k+3_pk+3 - SRK_k-3_pk-3 der benachbarten Netzelemente NEk+3 - NEk-3. Unter Berücksichtigung dieser kann das neu einzubindende Netzelement NEx den weiteren N=3 Vorgänger- und N=3 Nachfolger-Netzelementen NEk+3 - NEk-3 nun ebenfalls verschlüsselte Stabilisierungsnachrichten SB2, SB3 etc. zusenden. Beispielsweise wird durch das neu einzubindende Netzelement NEx eine zweite Stabilisierungsnachricht SB2 erzeugt, welche eine mit dem Empfangsschlüssel SRK_k_q des benachbarten Netzelementes NEk verschlüsselte Tabelle table mit dem Index q enthält. Analog hierzu können weitere, beispielsweise eine dritte Stabilisierungsnachricht SB3 gebildet werden, welche jeweils mit dem übertragenen Empfangsschlüssel SRK_k+3_p+3 - SRK_k-3_p-3 verschlüsselt werden und dem zugeordneten benachbarten Netzelement NEk+3 - NEk-3 übertragen werden.

Werden durch das neu einzubindenden Netzelement NEx mehrere Einbindungsnachrichten Jx an unterschiedliche benachbarte Netzelemente NEk, NEi, NEm (nicht in den Figuren dargestellt) versandt, so erhält dieser in der Regel auch mehrere erste Stabilisierungsnachrichten, welche jeweils unterschiedliche Diffie-Hellman-Parameter DH_k, DH_i, DH_m aufweisen. Die durch die unterschiedlichen benachbarten Netzelemente NEk, NEi, NEm erzeugten Empfangsschlüssel SRK_x_p, SRK_x_q, SRK_x_r sind somit ebenfalls unterschiedlich, selbst wenn durch das neu einzubindende Netzelement NEx vorzugsweise derselbe Satz von Diffie-Hellman-Parametern DHx verwendet wurde.

Da beim Empfang späterer Stabilisierungsnachrichten unterschieden werden muss, mit welchem Empfangsschlüsseln SRK_x_p, SRK_x_q, SRK_x_r die Stabilisierungsnachrichten verschlüsselt wurden, ist es insbesondere erforderlich, bereits die Einbindungsnachrichten Jx mit einem jeweiligen Index p, q, r zu versehen. Wurden beispielsweise durch das neu einzubindenden Netzelement NEx drei verschiedene Einbindungsnachrichten Jx verschickt und drei zugehörige erste Stabilisierungsnachrichten SB1 erhalten, so liegen drei unterschiedliche Empfangsschlüssel SRK_x_p, SRK_x_q, SRK_x_r im neu einzubindenden Netzelement NEx vor. Im neu einzubindenden Netzelement NEx werden die genannten drei Empfangsschlüssel SRK_x_p, SRK_x_q, SRK_x_r für eine vorgegebene Zeitdauer gespeichert und im Falle von eintreffenden Stabilisierungsnachrichten SB1, SB3 zur Entschlüsselung dieser verwendet.

Durch das neu einzubindende Netzelement NEx wird hierdurch festlegt, welcher der zugeordneten Empfangsschlüssel SRK_x_p, SRK_x_q, SRK_x_r von den benachbarten Netzelement NEk+3 - NEk-3 verwendet werden soll, indem dieser in die selbst erzeugten Stabilisierungsnachrichten SB2 ausschließlich einen ausgewählten Empfangsschlüssel SRK_x_p einfügt und diesen seinen benachbarten Netzelement NEk+3 - NEk-3 sendet. Hierdurch wird durch das neu einzubindende Netzelement NEx sichergestellt, dass nur der ausgewählte Empfangsschlüssel SRK_x_p in die nachfolgenden Stabilisierungsnachrichten SB2 eingefügt wird und die weiteren Empfangsschlüssel SRK_x_q, SRK_x_r keine Verwendung mehr finden. Nach einigen Stabilisierungszyklen sind sämtliche benachbarten Netzelement NEk+3 - NEk-3 über die Änderung des Empfangsschlüssels SRK_x_p informiert, d.h. nur für kurze Übergangszeit ist es erforderlich, mehrere Empfangsschlüssel SRK_x_p, SRK_x_q, SRK_x_r zur Entschlüsselung von ankommender Stabilisierungsnachrichten parallel vorzuhalten. Im Anschluss daran kann der ursprüngliche gemeinsame Empfangsschlüssel SRK_x_p gelöscht werden. Auf diese Weise ist ein einfaches Ersetzen und Erneuern von bestehenden Empfangsschlüsseln SRK_x_p, SRK_x_q, SRK_x_r innerhalb des P2P-Netzwerkes P2P möglich.

Das beschriebene Verfahren stellt somit sicher, dass ein neu einzubindendes Netzelement NEx ausschließlich von dessen benachbarten Netzelementen NEk+3 - NEk-3 zweite Stabilisierungsnachrichten SB2 erhalten kann. Zur Verschlüsselung dessen sind eine Signaturerzeugungen, ein Diffie-Hellman-Parameter-Austausch sowie zwei Signaturüberprüfungen beim neu einzubindenden Netzelementes NEx erforderlich, und zwar pro durch das neu einzubindendes Netzelement NEx versandten Einbindungsnachrichten Jx. Ferner werden in den angesprochenen benachbarten Netzelementen NEk pro Einbindungsnachricht Jx jeweils zwei Signaturüberprüfungen, ein Diffie-Hellman-Parameter-Austausch und eine Schlüsselerzeugung durchgeführt.

Verlässt nun beispielsweise das Netzelement NEk das P2P-Netzwerk P2P, so werden die diesem benachbarten Netzelemente NEk+3 - NEk-3 in den nachfolgenden Stabilisierungsnachrichten SB2, SB3 über die Adressinformationen und den Empfangsschlüssel der weiteren Nachbarn informiert, um die aktuell vorliegende Liste entsprechend zu aktualisieren.

Beispielsweise ergibt sich im Vergleich zum aus dem Stand der Technik bekannten Verfahren die folgende Anzahl an kryptographische Operationen bei einem n=6 Netzelemente NE1 - NE6 umfassenden P2P-Netzwerk P2P, bei dem an zwei benachbarte Netzknoten NEk, NEk' Einbindungsnachrichten Jx versandt wurden:
Die Einbindung des neuen Netzelementes NEx in das P2P-Netzwerk erfordert bei dem beschriebenen bekannten Verfahren 24 Signaturerzeugungen, 24 Diffie-Hellman-Austausche und 48 Signaturprüfungen, wobei unter Anwendung des erfindungsgemäßen Verfahrens bei beispielsweise 2 Einbindungsnachrichten Jx lediglich 4 Signaturerzeugungen, 4 Diffie-Hellman-Austausche und 8 Signaturprüfungen benötigt werden.

Entsprechend sind beim Verlassen des P2P-Netzwerk durch ein Netzelement beim beschriebenen bekannten Verfahren 12 Signaturerzeugungen, 12 Diffie-Hellman-Austausche und 24 Signaturprüfungen vorzusehen, wohingegen beim erfindungsgemäßen Verfahren keine kryptographischen Operationen erforderlich sind.

## Patentansprüche

1. Verfahren zur geschützten Einbindung zumindest eines Netzelementes (NEx) in ein mehrere Netzelemente (NE1 - NEn) aufweisendes Peer-to-Peer-Netzwerk (P2P), wobei zumindest ein dem einzubindenden Netzelement (NEx) zukünftig benachbartes Netzelement (NEk) innerhalb des Peer-to-Peer-Netzwerkes (P2P) ermittelt wird,
**dadurch gekennzeichnet,**
**dass** zwischen dem zumindest einem benachbarten Netzelement (NEk) und dem einzubindenden Netzelement (NEx) eine authentifizierte Schlüsselaushandlung durchgeführt wird, wobei dem einzubindenden Netzelement (NEx) zumindest ein Empfangsschlüssel (SRK_x_px) zugeordnet wird und die weiteren Empfangsschlüssel (SRK_k+N_pk+N - SRK_k-N_pk-N) der das benachbarte Netzelement (NEk) umgebenden Netzelemente (NEk+N - NEk-N) mit dem zugeordneten Empfangsschlüssel (SRK_x_px) verschlüsselt an das einzubindende Netzelement (NEx) übertragen werden.

2. Verfahren nach Anspruch 1,
**dadurch gekennzeichnet,**
**dass** der zugeordnete Empfangsschlüssel (SRK_x_px) an die das benachbarte Netzelement (NEk) umgebenden Netzelemente (NEk+N - NEk-N) übertragen wird.

3. Verfahren nach Anspruch 1 oder 2,
**dadurch gekennzeichnet,**
**dass** alle nachfolgenden an das neu einzubindende Netzelement (NEx) gerichteten Signalisierungsnachrichten (SB2) mittels des zugeordneten Empfangsschlüssel (SRK_x_px) verschlüsselt werden.

4. Verfahren nach einem der Ansprüche 1 bis 3,
**dadurch gekennzeichnet,**
**dass** die Festlegung des zugeordneten Empfangsschlüssels (SRK_x_px) unter Anwendung des Diffie-Hellman-Verfahrens erfolgt.

5. Verfahren nach einem der Ansprüche 1 bis 4,
**dadurch gekennzeichnet,**
**dass** zur authentifizierten Schlüsselaushandlung durch das neu einzubindende Netzelement (NEx) eine authentifizierte Einbindungsnachricht (Jx) erzeugt wird, welche ein dem neu einzubindenden Netzelement (NEx) zugeordnetes erstes Zertifikat (Cert_x) und eine erste digitale Signatur (Sign1) aufweist.

6. Verfahren nach Anspruch 5,
**dadurch gekennzeichnet,**
**dass** durch das benachbarte Netzelement (NEk) eine erste Stabilisierungsnachricht (SB1) erzeugt wird, welche eine mittels des zugeordneten Empfangsschlüssels (SRK_x_px) verschlüsselte Tabelle (table), ein dem benachbarten Netzelement (NEk) zugeordnetes zweites Zertifikat (Cert_k) und eine zweite digitale Signatur (Sign2) aufweist.

7. Verfahren nach einem der Anspruch 5 oder 6,
**dadurch gekennzeichnet,**
**dass** mittels der ersten und zweiten digitalen Signatur (Sign1, Sign2) die öffentlichen Diffie-Hellman-Parameter (DH_x, DH_k) des neu einzubindenden Netzelementes (NEx) bzw. des benachbarten Netzelement (NEk) sowie weitere Adressinformationen zwischen dem neu einzubindenden Netzelement (NEx) und dem benachbarten Netzelement (NEk) ausgetauscht werden.

8. Verfahren nach Anspruch 7,
**dadurch gekennzeichnet,**
**dass** als weitere Adressinformationen die jeweils zugeordnete Knoten-ID (ID), IP-Adresse (IP) und/oder Portnummer (port) ausgetauscht werden.

9. Verfahren nach einem der Ansprüche 5 bis 8,
**dadurch gekennzeichnet,**
**dass** mittels der ersten digitalen Signatur (Sign1) eine Zeitinformation (ts) zum Schutz vor Replay-Angriffen übertragen wird.

10. Verfahren nach einem der Ansprüche 5 bis 9,
**dadurch gekennzeichnet,**
**dass** einer Einbindungsnachricht (Jx) jeweils ein Index (px) zugeordnet wird.

11. Verfahren nach einem der Ansprüche 7 bis 10,
**dadurch gekennzeichnet,**
**dass** die Diffie-Hellman-Parameter (DH_x, DH_k) aktuell erzeugt oder aus einem vorberechneten Satz von Parametern ausgewählt werden.

12. Verfahren nach Anspruch 10 oder 11,
**dadurch gekennzeichnet,**
**dass** der Empfangsschlüssel (SRK_x_px) unter Berücksichtigung der übertragenen Diffie-Hellman-Parameter (DH_x, DH_k) für jeweils einen Index (px) ermittelt wird.

13. Verfahren nach Anspruch 10 oder 12,
**dadurch gekennzeichnet,**
**dass** die weiteren Empfangsschlüssel (SRK_k+N_pk+N - SRK_k-N_pk-N) der das benachbarte Netzelement (NEk) umgebenden Netzelemente (NEk+N - NEk-N) mittels der verschlüsselten Tabelle (table) übertragen werden.
